# EUROPÄISCHE PATENTSCHRIFT

(11) **EP 1 531 543 B1**
(45) Veröffentlichungstag und Bekanntmachung des Hinweises auf die Patenterteilung: **08.12.2010**
(21) Anmeldenummer: 04022751.4
(22) Anmeldetag: 24.09.2004
(51) Int. Cl.: H02P 6/14, H02M 7/5387, H02M 7/48

(54) **Verfahren zur Stromversorgung eines mehrsträngigen, durch Pulsweitenmodulation gesteuerten Elektromotors**
Method for supplying current to a multi-phase PWM-controlled electrical motor
Méthode de contrôle PWM du courant pour un moteur électrique polyphasé

(30) Priorität: 11.11.2003 DE 10352508
(43) Veröffentlichungstag der Anmeldung: 18.05.2005
(73) Patentinhaber: ROBERT BOSCH GMBH, 70442 Stuttgart (DE)
(72) Erfinder: Tobias, Ralph, 76534 Baden-Baden (DE); Sutter, Joerg, 76571 Gaggenau (DE); Frey, Heiko, 76476 Bischweier (DE); Jaervelaeinen, Tero, 77815 Buehl-Weitenung (DE); Kloenne, Alfons, 77815 Buehl (DE); Schmitt, Gilles, 57415 Enchenberg (DE)

(56) Entgegenhaltungen:
- DE-A1- 10 112 820
- PATENT ABSTRACTS OF JAPAN Bd. 014, Nr. 166 (E-0911), 30. März 1990 (1990-03-30) -& JP 02 023092 A (SECOH GIKEN INC), 25. Januar 1990 (1990-01-25)
- PATENT ABSTRACTS OF JAPAN Bd. 1995, Nr. 04, 31. Mai 1995 (1995-05-31) -& JP 07 007959 A (TOYO ELECTRIC MFG CO LTD), 10. Januar 1995 (1995-01-10)

## Beschreibung

### Stand der Technik

Die Erfindung geht aus von einem Verfahren zur Stromversorgung eines mehrsträngigen, elektronisch kommutierbaren, durch Pulsweitenmodulation gesteuerten Elektromotors nach der Gattung des Anspruchs 1. Derartige getaktete Motoren benötigen eine Zwischenkreiskapazität, welche die Wechselrichter von der Zuleitungsinduktivität entkoppelt. Hierfür werden üblicherweise Elektrolytkondensatoren eingesetzt, deren Lebensdauer in hohem Maße durch die Erwärmung des Elektrolyten bestimmt ist, welche bei der Verwendung der Motoren in Kraftfahrzeugen ohnehin überdurchschnittlich stark ist- Herkömmliche Ansteuerverfahren für die den Strangwicklungen des Motors zugeordneten Wechselrichter verursachen aufgrund einer hohen Strombelastung der Kondensatoren zusätzlich eine starke Erwärmung dieser Bauelemente und reduzieren hierdurch deren Lebensdauer beträchtlich. Um eine ausreichende Lebensdauer zu garantieren sind daher große Elektrolytkondensatoren oder eine Mehrzahl parallel geschalteter Kondensatoren erforderlich, um die Erwärmung niedrig zu halten. Das Dokument JP 02023092 schlägt ein Verfahren zur Reduzierung des Kondensatorstromes vor, bei dem die Eins- und Ausschaltsignale von Bestromungsblöcken zeitlich verzuhaben werden.

Der Erfindung liegt die Aufgabe zugrunde, ein Verfahren aufzuzeigen, mit dem die Strombelastung der Zwischenkreiskapazität eines getakteten, elektronisch kommutierbaren Motors reduziert und damit die Größe, beziehungsweise die Anzahl der die Zwischenkreiskapazität bildenden Kondensatoren minimiert werden kann. Diese Aufgabe wird gelöst durch die kennzeichnenden Merkmale des Anspruchs 1.

Mit dem vorgeschlagenen Verfahren erreicht man durch die Vermeidung von Stromspitzen und durch eine gleichmäßigere Verteilung der Strompulse, dass die Strombelastung des oder der Kondensatoren im Zwischenkreis im Vergleich zu herkömmlichen Ansteuerverfahren erheblich reduziert wird. Dies ist insbesondere dann wichtig, wenn die Kondensatoren im Hochtemperaturbereich von Kraftfahrzeugen angeordnet sind, beispielsweise im Bereich des Verbrennungsmotors, wo die Temperatur der Bauelemente als begrenzender Faktor der Lebensdauer des Gesamtproduktes von besonderer Bedeutung ist. Neben der Kosteneinsparung durch die Möglichkeit der Verwendung kleinerer oder weniger Kondensatoren kann dabei auch Bauraum eingespart werden, was beispielsweise im Motorraum eines Kraftfahrzeuges einen zusätzlichen Vorteil bringt. Die Taktung der Strom führenden Schalter der Wechselrichter für die einzelnen Stränge des Motors wird zweckmäßigerweise von unterschiedlichen Zeitbasen abgeleitet, wobei es sich weiterhin als günstig erwiesen hat, wenn die Taktung der Pulse zeitlich versetzt, jedoch mittig ausgerichtet im sogenannten center aligned modus erfolgt. Hierdurch kann die Gleichmäßigkeit der Strombelastung der Zwischenkreiskapazität noch weiter erhöht werden.

Eine erste vorteilhafte Ausführungsform der Erfindung besteht darin, dass die Taktung der Pulse für die Schalter zweier Stränge des Motors um 180° phasenverschoben und von zwei verschiedenen Zeitbasen abgeleitet wird. Bei einem drei- oder mehrsträngigen Motor werden dann die gleichen Zeitbasen zyklisch wieder verwendet, beispielsweise also in einem dreisträngigen Motor für den dritten Strang die zeitgleiche Taktung der Pulse wie im ersten Strang. Hierbei hat es sich weiterhin als zweckmäßig erwiesen, die Taktung der Pulse für die positiven Halbwellen der Strangströme durch einen ersten Zeitgeber und für die negativen Halbwellen der Strangströme durch einen zweiten Zeitgeber durchzuführen, dessen Zeitbasis gegenüber der ersten Zeitbasis um 180° phasenverschoben ist.

Für einen dreisträngigen Motor ergibt sich eine besonders vorteilhafte Ausgestaltung der Erfindung, wenn die Taktung der Pulse in den drei stromführenden Brückenhälften der Wechselrichter jeweils um 120° phasenverschoben wird, wobei ein zur Steuereinheit der Anordnung gehörender Mikrocomputer mit drei Zeitgebern zur Bereitstellung der drei Zeitbasen ausgestattet wird.

Eine weitere vorteilhafte Ausführungsform der Erfindung arbeitet nicht mit einer fest vorgegebenen Reihenfolge und Taktung der Pulse sondern mit einer rechnerischen Optimierung der Pulsverteilung innerhalb eines Taktes der Pulsweitenmodulation. Hierbei erfolgt die Taktung der Pulse der einzelnen Stränge des Motors derart, dass der längste Puls am Beginn der Taktperiode ausgegeben wird und jeder weitere Puls soweit zum Ende der Taktperiode verschoben wird, dass er zumindest mit dem längsten Puls keine oder nur die geringstmögliche Überlappung aufweist. Dies hat hinsichtlich der Strombelastung der Zwischenkreiskapazität den Vorteil, dass mit dem längsten Puls, welcher in der Regel dem größten Strangstrom entspricht, die geringstmögliche Überlagerung durch die restlichen Strangströme erfolgt. Die Taktung der Pulse für die Schalter der Wechselrichter eines dreisträngigen Motors wird dann zweckmäßigerweise so gewählt, dass der kürzeste Puls soweit zum Ende der Taktperiode verschoben wird, dass er mit dem längsten und mit dem zweitlängsten Puls keine, beziehungsweise die geringstmögliche Überlappung aufweist. Da der kürzeste Puls in der Regel dem niedrigsten Strangstrom entspricht, ist seine Überlappung mit dem zweitlängsten Puls für die Gesamthöhe des Stromes über die Zwischenkreiskapazität von einer geringeren Auswirkung. Die Steuerung der Taktung der Pulse der verschiedenen Stränge kann hierbei weiter vereinfacht werden, wenn der längste Puls jeweils am Beginn der Taktperiode ausgegeben und der kürzeste Puls grundsätzlich ans Ende der Taktperiode verschoben wird.

Weitere Einzelheiten und vorteilhafte Ausgestaltungen der Erfindung ergeben sich aus der Beschreibung der Ausführungsbeispiele.

Die Abbildungen zeigen in
Figur 1 eine Schaltungsanordnung zur Stromversorgung eines dreisträngigen, durch Pulsweitenmodulation gesteuerten Elektromotors, in
Figur 2 im unteren Teil den Verlauf der Strangströme in den drei Phasen des Motors und darüber die zugehörige Verteilung der Ströme, die für den jeweiligen Strang aus dem Zwischenkreis entnommen werden, in
Figur 3 die beispielhafte Verteilung der Pulse zur Bestromung von drei Motorsträngen innerhalb von zwei Modulationstakten bei einer Verschiebung der Pulsmitten zweier Stränge des Motors um 180° gegeneinander, in
Figur 4 die beispielhafte Verteilung der Pulse für die Bestromung von drei Motorsträngen innerhalb von zwei Modulationstakten bei einer Verschiebung der Pulsmitten gegeneinander um jeweils 120° und in
Figur 5 die beispielhafte Verteilung der Pulse für die Bestromung von drei Motorsträngen innerhalb von zwei Modulationstakten bei einer Vorausberechnung der Pulslänge in den einzelnen Strängen.

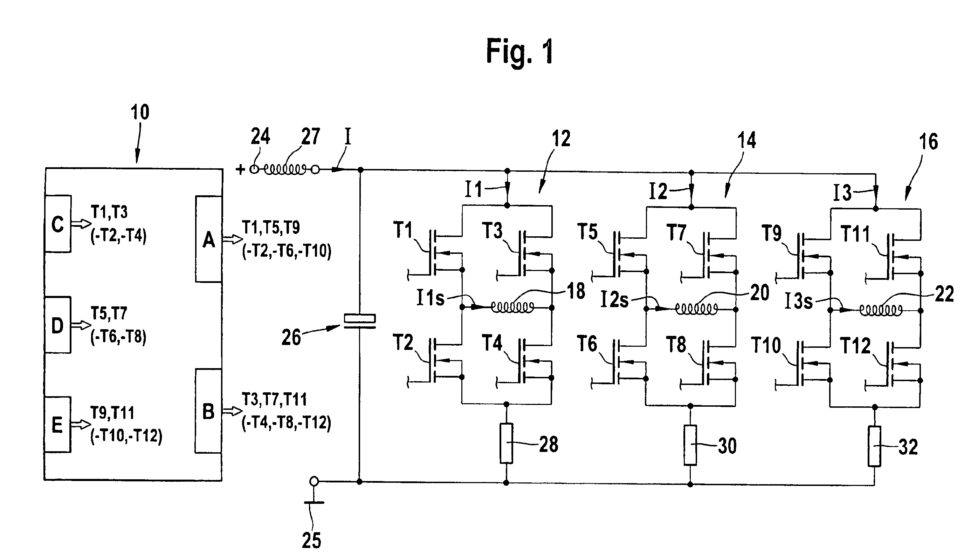

In Figur 1 ist mit 10 eine Steuereinheit für die MOSFET-Schalter T1 bis T12 von Wechselrichtern 12, 14 und 16 für die drei Stränge 18, 20 und 22 eines elektronisch kommutierbaren, durch Pulsweitenmodulation gesteuerten Elektromotors bezeichnet. Die Steuereinheit 10 enthält im Wesentlichen einen Mikrocontroller und eine Treiberstufe, deren Aufbau grundsätzlich bekannt ist und hier nicht näher erörtert werden braucht. Wesentlich hinsichtlich des Aufbaus der Steuereinheit 10 ist die Verwendung einerseits zweier getrennter, um 180° gegeneinander verschobener Zeitgeber A und B für eine erste Variante und andererseits dreier getrennter, jeweils um 120° oder variabel gegeneinander phasenverschobener Zeitgeber C, D und E für zwei weitere Varianten des erfindungsgemäßen Verfahrens. Die Zeitgeber A und B bilden zwei um 180° gegeneinander verschobene Zeitbasen, die von den Zeitgebern C, D und E gebildeten Zeitbasen sind jeweils um 120° oder individuell variiert gegeneinander verschoben. Die Zuordnung der einzelnen Zeitbasen zu den Schaltern T1 bis T12 der Wechselrichter 12 bis 16 wird weiter unten erläutert.

Die Stromversorgung des Motors erfolgt aus einem beispielsweise vom 12 Volt-Bordnetz eines Kraftfahrzeuges gebildeten Gleichspannungsnetz mit einem Pluspol 24 und einem an Masse liegenden Minuspol 25. Den Motorsträngen 18 bis 22 vorgeschaltet ist eine Zwischenkreiskapazität 26, vorzugsweise in Form eines einzelnen größeren oder mehrerer kleinerer, parallel geschalteter Elektrolytkondensatoren, welche in den Stromflusspausen der Schalter T1 bis T12 der Wechselrichter 12 bis 16 den von der Bordnetzinduktivität getriebenen Zuleitungsstrom aus dem Gleichspannungsnetz übernehmen. Zur Erfassung der Strangströme I1, I2 und I3 sind zwischen den Wechselrichtern 12, 14 und 16 und dem Massepol 25 des Gleichspannungsnetzes Messwiderstände 28, 30 und 32 angeordnet, welche einen den Strangströmen I1, I2 und I3 proportionalen Spannungsabfall an eine nicht dargestellte Messanordnung und von dort wiederum an die Steuereinheit 10 liefern.

Bei einer ersten Ausführungsform der Erfindung besitzt die Steuereinheit 10 zwei Zeitgeber A und B, deren Zeitbasen um 180° gegeneinander phasenverschoben sind. Hierdurch erfolgt eine um 180° versetzte Taktung der Pulse zur Ansteuerung der Schalter T1, T3; T5, T7 und T9, T11. Dabei wird die Pulsweitenmodulation der positiven Halbwellen der Strangspannungen durch die Transistoren T1, T5 und T9, die Pulsweitenmodulation der negativen Halbwellen der Strangspannungen durch die Transistoren T3, T7 und T11 bewirkt. Die Schalter T1, T5 und T9 werden von dem Zeitgeber A gesteuert, um 180° phasenverschoben die Schalter T3, T7 und T11 von dem Zeitgeber B. Da bei einem sinusförmigen Verlauf der um jeweils 120°gegeneinander phasenverschobenen Strangströme I1, I2 und I3 niemals alle drei Ströme das gleiche Vorzeichen besitzen, ergibt sich zwangsläufig eine Verschiebung um 180° für die Pulse eines Phasenstromes gegenüber den Pulsen für die beiden anderen Phasenströme. In Figur 1 ist die Zuordnung der einzelnen Schalter zum jeweiligen Zeitgeber schematisch durch einen Ausgangspfeil an den Zeitgebern A und B dargestellt, wobei dem Zeitgeber A die Schalter für die positiven Halbwellen T1, T5 und T9 und dem Zeitgeber B die Schalter für die negativen Halbwellen T3, T7 und T11 zugeordnet sind. Weiterhin sind bei dieser Zuordnung an den Zeitgeber A über invertierende Ausgänge die Schalter T2, T6 und T10 angeschlossen, an den Zeitgeber B über invertierende Ausgänge die Schalter T4, T8 und T12. Mit dieser Zuordnung ist ein aktiver Freilaufbetrieb in den Stromflusspausen möglich. Während der Leitendphase zum Beispiel des Transistors T1 fließt der Strom I1 über den Schalter T1, den dauernd leitend gehaltenen Schalter T4 sowie über den Messwiderstand 28 nach Masse. Der Schalter T3 ist gesperrt. Der Schalter T2 wird über den invertierenden Ausgang des Zeitgebers A im Wechsel mit dem Schalter T1 eingeschaltet, so dass sich bei offenem Schalter T1 ein aktiver Freilauf des Stromes im Strang 18 über den dauernd geschlossenen Schalter T4 und den im Gegentakt zum Schalter T1 betriebenen Schalter T2 ergibt. Entsprechendes gilt für die Wechselrichter 14 und 16.

Die Schaltungsanordnung gemäß Figur 1 enthält eine Zwischenkreiskapazität 26, welche vorzugsweise von einem größeren einzelnen Elektrolytkondensator oder mehreren parallel geschalteten, kleineren Elektrolytkondensatoren gebildet wird. Diese Zwischenkreiskapazität entkoppelt die Wechselrichter 12, 14 und 16 von der Zuleitungsinduktivität 27 und nimmt in den Stromflusspausen der Schalter der Wechselrichter den Zuleitungsstrom I auf. Da es sich hierbei um hohe Ströme handelt und um entsprechend hohe thermische Belastungen der Zwischenkreiskapazität 26, gilt es, den von der Netzinduktivität 27 getriebenen mittleren Zuleitungsstrom I zu reduzieren und damit den Aufwand für die Zwischenkapazität 26.

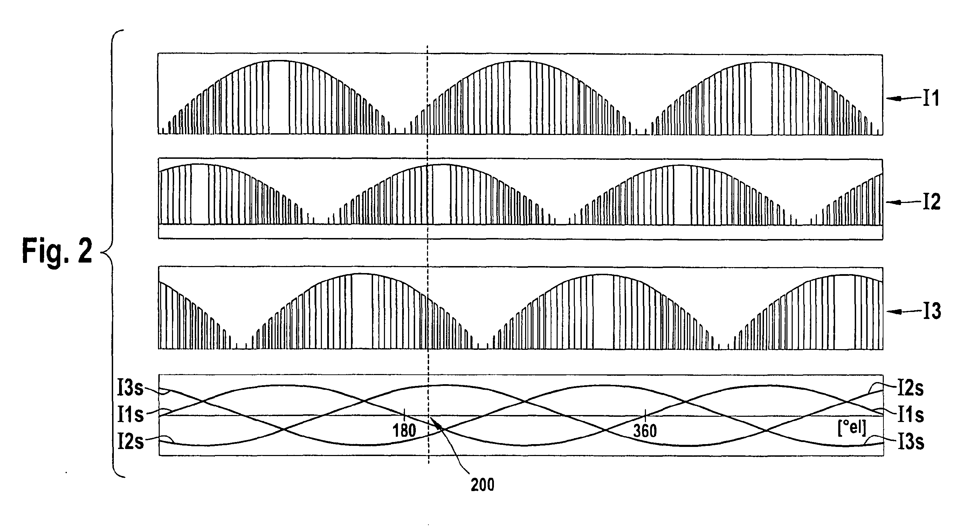

In Figur 2 ist im unteren Diagramm der sinusförmige, um jeweils 120° phasenverschobene Verlauf der Strangströme I1S, I2S und I3S dargestellt, wobei die Maximalamplitude der Ströme von der Belastung des Motors und der entsprechenden Aussteuerung der Wechselrichter bestimmt wird. Die drei oberen Diagramme der Figur 2 zeigen die Zuordnung der Strompulse der Wechselrichterzuleitung zu dem sinusförmigen Verlauf der Ströme I1, I2 und I3, wobei die Stromimpulse jeweils positive Richtung zeigen. Die negative Stromrichtung im Strang ergibt sich durch die Umschaltung in den Vollbrücken- Wechselschaltern 12, 14 und 16.

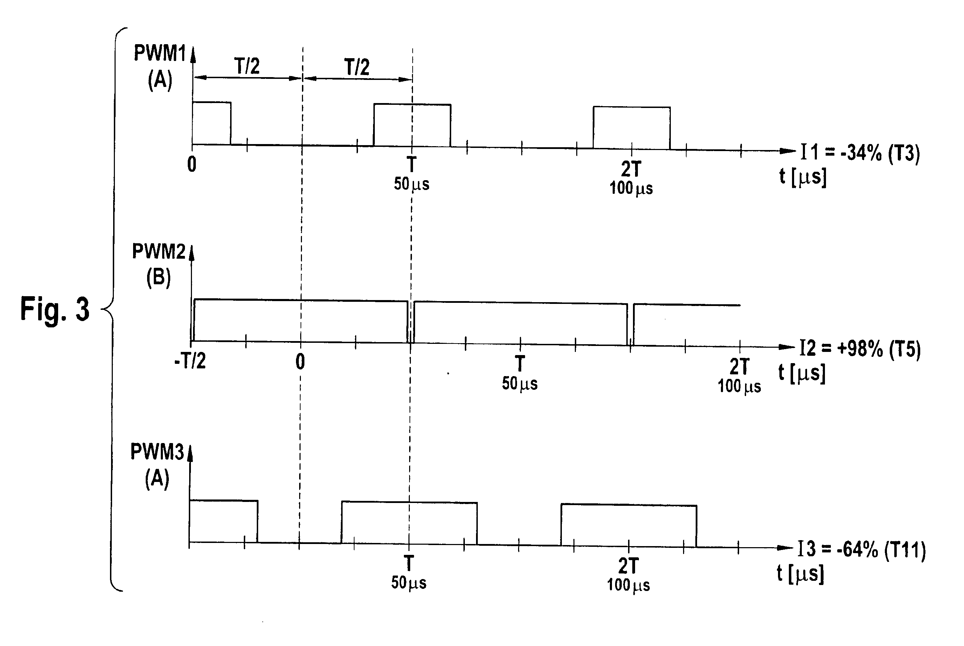

Figur 3 zeigt eine Momentaufnahme der Pulse für die Ströme I1, 12 und I3 entsprechend sinusförmigen Motorströmen bei einer Rotorposition von 200°el. Hierbei sowie in den folgenden Darstellungen ist jeweils eine Vollaussteuerung des Motors zugrunde gelegt. Für diesen Zeitpunkt hat die Spannung über dem Strang 1 einen Wert von (minus) 34 %, die Spannung über dem Strang 2 von (plus) 98 % und die Spannung über dem Strang 3 von (minus) 64 % der Zwischenkreisspannung. Diese Spannungswerte entsprechen der Dauer der Einzelimpulse im jeweiligen Strang. Dabei ist die Taktung der Pulse zur Ansteuerung der stromführenden Schalter T3, T5 und T11 der Wechselrichter 12, 14 und 16 von unterschiedlichen Zeitbasen abgeleitet und jeweils um eine halbe Periodendauer entsprechend 180° phasenverschoben. Zwei der Motorstränge, im Ausführungsbeispiel gemäß Figur 3 die Ströme I1 und I3 sind dann gleichphasig und jeweils 180° gegenüber den Pulsen des Strome I2 verschoben. Die Taktung ist mittig zum jeweiligen Puls ausgerichtet im sogenannten center aligned modus. Aus der Darstellung ist erkennbar, dass sich bei Vollaussteuerung der Strangspannungen, aber auch noch bei reduzierten Spannungen, keine oder nur geringe Lücken im Stromverlauf ergeben, während ohne Phasenverschiebung sich die Einzelimpulse zentrisch addieren würden, so dass zwischen den Pulsen der Spannungen Lücken verbleiben, welche um so größer sind, je geringer die Aussteuerung des Motors ist.

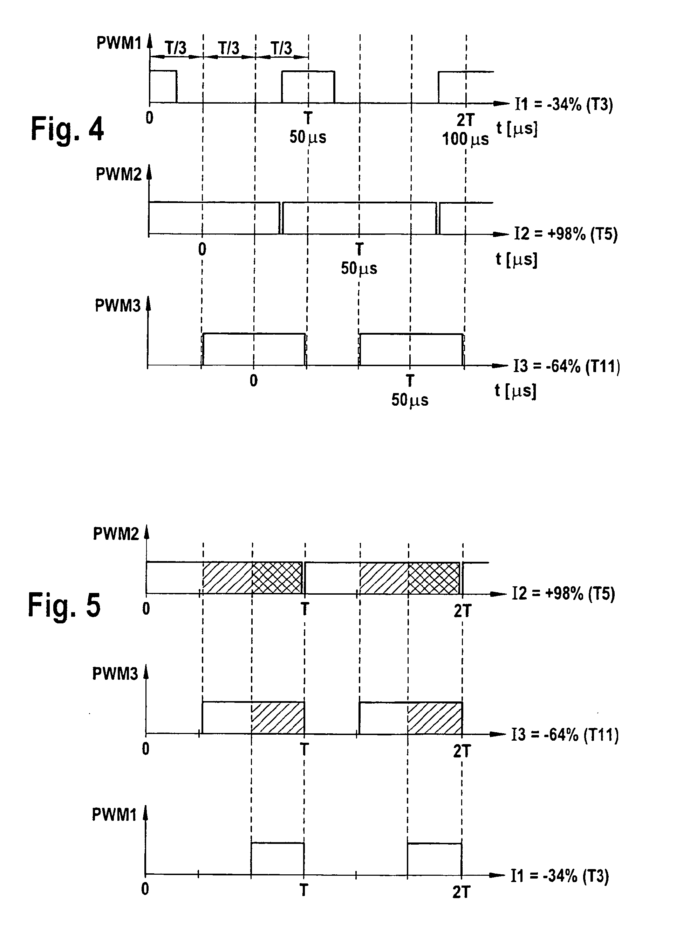

Figur 4 zeigt ein Diagramm, in dem die Taktung der Pulse in den drei Brückenhälften, hier über die Schalter T3, T5 und T11 der Wechselrichter 12, 14 und 16 eines dreisträngigen Motors jeweils um 120° phasenverschoben ist. Für diese Art der Ansteuerung werden die Zeitgeber C, D und E der Steuereinheit 10in Figur 1 verwendet, deren Zeitbasen um jeweils 120° gegeneinander verschoben sind. Die Zuordnung zu den einzelnen Schaltern der Wechselrichter 12, 14 und 16 ist wiederum bei den Ausgangspfeilen der Zeitgeber vermerkt. So steuert der Zeitgeber C die Schalter T1 und T3 und gleichzeitig im aktiven Freilauf im Gegentakt die Schalter T2 und T4. Der Zeitgeber D steuert die Schalter T5 und T7 sowie zusätzlich T6 und T8 und der Zeitgeber E die Schalter T9 und T11 sowie T10 und T12. Das Impulsdiagramm gilt wiederum für eine Momentaufnahme bei 200°el. Die Pulse werden wiederum mittig zu den Taktsignalen ausgegeben. Die mittige Ausrichtung der Pulse (center aligned modus) ist bei einer Phasenverschiebung von jeweils 120° entsprechend einem Drittel der Gesamtperiode jedoch nicht zwingend, hier wäre auch eine Anordnung der Pulse jeweils zu Taktbeginn möglich mit nahezu gleichgutem Ergebnis hinsichtlich der Entstehung von Stromflusspausen und demzufolge einer hohen Belastung der Zwischenkreiskapazität 26. Die mittige Ausrichtung hat zusätzlich noch den Vorteil, dass die einzelnen Pulse dann symmetrisch angeordnet sind zur der in der Schaltungsanordnung gemäß Figur 1 nicht dargestellten Erfassung der Phasenströme durch den Messwiderständen 28 nachgeordnete Analog-Digitalwandler, welche in der Regel in Taktmitte angestoßen werden. Solange sich die Lücken zwischen den Impulsen der Strangströme nicht decken muss die Zwischenkreiskapazität 26 nur geringere Ströme aufnehmen und kann demzufolge kleiner bemessen werden.

Figur 5 zeigt eine weitere vorteilhafte Möglichkeit zur Gestaltung einer zeitlich versetzten Taktung der Pulse zur Ansteuerung der Schalter T1 bis T12 der Wechselrichter 12, 14 und 16, bei der ebenfalls eine Überlappung der Pulse vermieden oder zumindest verringert werden kann. Dieses Verfahren basiert auf einer Vorausberechnung der Pulslängen für die einzelnen Strangströme I1, I2 und I3 im nachfolgenden Takt, es enthält keine feste Zuordnung der Phasenverschiebung zwischen den Impulsen der einzelnen Strangströme.

Die Taktung der Pulse erfolgt derart, dass der längste Impuls jeweils am Beginn der Taktperiode T ausgegeben und jeder weitere Puls soweit zum Ende der Taktperiode T verschoben wird, dass mit dem längsten Puls keine oder die geringstmögliche Überlappung erfolgt. Bei der Darstellung in Figur 5 ist ebenfalls der Volllastbetrieb zugrunde gelegt mit einer entsprechend großen Überlappung der Pulse, welche jedoch mit verringerter Last abnimmt. Für die dargestellte Momentaufnahme, wiederum entsprechend einem Phasenwinkel der Strangströme von 200°el., wird der längste Puls entsprechend der Höhe des Strangstromes 12 am Beginn der Taktperiode T ausgegeben und der kürzeste Puls entsprechend der Größe des Strangstromes I1 ans Ende der Taktperiode T verschoben. Die mittelgroße Pulslänge entsprechend dem Strangstrom 13 soll nun so angeordnet werden, dass sich mit dem größten Strangstrom 12 eine möglichst geringe Überlappung ergibt. Aus diesem Grund ist der Puls des Strangstromes I3 ebenfalls ans Ende der Taktperiode T verschoben. Bei dieser Art der Pulsanordnung ist die Tatsache entscheident, dass der größten Pulslänge der höchste Strom entspricht. Demzufolge sollen zusätzliche Überlagerungen mit diesem Stromimpuls vermieden werden. Eine Überlappung der kürzeren Impulse entsprechend den niedrigeren Strangströmen wirkt sich dagegen weniger aus. Insgesamt kann bei jeweils kürzerer Pulsdauer der einzelnen Strangströme in vielen Fällen eine Überlappung vermieden werden, wenn der zweitlängste Puls erst nach dem Ende des längsten Pulses und der dritte Puls erst nach dem Ende des zweitlängsten Pulses ausgegeben wird. Sollten der zweitgrößte, beziehungsweise der kürzeste Puls nicht ins offene Zeitfenster des Taktes passen, so werden sie soweit wie möglich ans Taktende verschoben derart, dass der zweitlängste Puls zumindest wenig Überlappung mit dem längsten Puls aufweist. Die Überlappung des zweitlängsten Pulses mit dem kürzesten Puls ist in jedem Fall der Überlappung mit dem längsten Puls vorzuziehen.

Hierbei wird davon ausgegangen, dass aufgrund der übergeordneten Regelung in der Steuereinheit 10 keine Phasenverschiebung zwischen der Polradspannung und dem Strangstrom vorliegt, so dass die Größe der Polradspannung für die Berechnung der Höhe der Strangströme, beziehungsweise der jeweils im nächsten Takt folgenden Pulslängen, benutzt werden kann.

Gegenstand der vorliegenden Erfindung ist somit eine versetzte Taktung der Pulse zur Ansteuerung der Schalter von wenigstens zwei in Vollbrückenanordnung ausgeführten Wechselrichtern. Durch die erfindungsgemäße Bereitstellung der pulsweitenmodulierten Ansteuersignale eines wenigstens zweisträngigen, elektronisch kommutierten Motors kann die Strombelastung der erforderlichen Zwischenkreiskapazität und damit die Größe der erforderlichen Kondensatoren deutlich reduziert werden. Dies gilt insbesondere bei der Verwendung derartiger Motoren in Hochtemperaturbereichen, beispielsweise im Motorraum von Kraftfahrzeugen, wo zusätzlich zu der durch die Strombelastung des Zwischenkreiskondensators entstehenden Wärme die Umgebungstemperatur die Lebensdauer des Kondensators verringert. Durch die Reduzierung der Strombelastung der Zwischenkreiskapazität 26 können in beachtlichem Maße Stoffkosten und zusätzlich auch Bauraum eingespart werden. Die Voraussetzung hierfür ist die Verwendung von Wechselrichtern 12, 14 und 16 in Vollbrückenschaltung, weil hierbei jeder Motorstrang unabhängig vom anderen bestromt werden kann und somit Freiräume für die Ansteuerung der Schalter und die Verteilung der Strompulse auf der Zeitachse entstehen. Der Strom über die Zwischenkreiskapazität 26 kann im gesamten Aussteuerbereich deutlich verringert werden, bei halber Last sogar auf etwa ein Drittel der herkömmlichen Strombelastung.

## Patentansprüche

1. Verfahren zur Stromversorgung eines mehrsträngigen, elektronisch kommutierbaren, durch Pulsweitenmodulation gesteuerten Elektromotors aus einem Gleichspannungsnetz, insbesondere zum Betreiben eines Motors für die elektrische Lenkhilfe eines Kraftfahrzeuges, mit einer mit einem Mikrocontroller aufgebauten Steuereinheit für wenigstens zwei in Vollbrückenschaltung beziehungsweise H-Schaltung, aufgebaute Wechselrichter zur Speisung der Strangwicklungen des Motors und mit wenigstens einer zwischen dem Gleichspannungsnetz und den Wechselrichtern angeordneten Zwischenkreiskapazität, vorzugsweise einem Elektrolytkondensator, zur Übernahme der Strangströme während der Stromflusspausen der elektronischen Schalter der Wechselrichter, **dadurch gekennzeichnet, dass** die Strombelastung der Zwischenkreiskapazität (26) reduziert wird durch eine zeitlich derart versetzte Taktung der Pulse in verhältnis zu eheander zur Ansteuerung der Schalter (T1,T3;T5,T7;T9,T11) der Wechselrichter (12,14,16), dass eine Überlappung der Pulse der Strangströme (I1,I2,I3) vermieden oder zumindest verringert wird.

2. Verfahren nach Anspruch 1, **dadurch gekennzeichnet, dass** die Taktung der Pulse zur Ansteuerung der stromführenden Schalter (T1,T3;T5.T7;T9,T11) der Wechselrichter (12, 14, 16) von unterschiedlichen Zeitbasen (A,B;C,D,E) abgeleitet wird.

3. Verfahren nach Anspruch 1 oder 2, **dadurch gekennzeichnet, dass** die Taktung der Pulse mittig ausgerichtet ist, bzw center aligned modus.

4. Verfahren nach einem der vorhergehenden Ansprüche, **dadurch gekennzeichnet dass** die Taktung der Pulse zur Ansteuerung der Schalter (T1,T3;T5,T7;T9,T11) der Wechselrichter (12,14,16) zweier Stränge (18,20,22) des Motors um 180° phasenverschoben ist.

5. Verfahren nach Anspruch 4, **dadurch gekennzeichnet, dass** die Taktung der Pulse für die positivern Halbwellen der Strangströme (I1,I2,I3) durch einen ersten Zeitgeber (A) und für die negativen Halbwellen der Strangströme (I1,I2,I3) durch einen zweiten Zeitgeber (B) erfolgt.

6. Verfahren nach einem der Ansprüche 1 bis 3, **dadurch gekennzeichnet, dass** die Taktung der Pulse in den drei Brückenhälften (T1,T3;T5,T7;T9,T11) der Wechselrichter (12,14,16) eines dreisträngigen Motors jeweils um 120° phasenverschoben ist.

7. Verfahren nach einem der Ansprüche 1 bis 3, **dadurch gekennzeichnet, dass** die Taktung der Pulse zur Ansteuerung der Schalter (T1,T3;T5,T7;T9,T11) der Wechselrichter (12,14,16) derart erfolgt, dass der längste Puls am Beginn der Taktperiode (T) ausgegeben und jeder weitere Puls soweit zum Ende der Taktperiode (T) verschoben wird, dass zumindest mit dem längsten Puls keine oder die geringstmögliche Überlappung erfolgt.

8. Verfahren nach Anspruch 7 **dadurch gekennzeichnet, dass** die Taktung der Pulse zur Ansteuerung der Schalter (T1,T3;T5,T7;T9,T11) der Wechselrichter (12,14,16) eines dreisträngigen (18,20,22) Motors derart erfolgt, dass der kürzeste Puls soweit zum Ende der Taktperiode (T) verschoben wird, dass er mit dem längsten und/oder dem zweitlängsten Puls keine oder die geringstmögliche Überlappung aufweist.

9. Verfahren nach Anspruch 7 oder 8, **dadurch gekennzeichnet, dass** der längste Puls am Beginn der Taktperiode (T) ausgegeben und der kürzeste Puls ans Ende der Taktperiode (T) verschoben wird.

## Claims

1. Method for supplying current to a multi-phase PWM-controlled, electronically computatable electric motor from a direct voltage network, in particular for operating a motor, for the electric power steering of a motor vehicle, having a control unit which is constructed with a microcontroller for at least two power inverters which are constructed in a full bridge circuit, or H-circuit, for feeding the phase windings of the motor, and with at least one intermediate circuit capacitor, preferably an electrolytic capacitor, which is arranged between the direct voltage network and the power inverters and has the purpose of taking up the phase currents during the current flow intervals of electronic switches of the power inverters, **characterized in that** the current loading of the intermediate circuit capacitor (26) is reduced by chronologically offset clocking of the pulses in proportion to one another for the actuation of the switches (T1, T3; T5, T7; T9, T11) of the power inverters (12, 14, 16) in such a way that overlapping of the pulses of the phase currents (I1, I2, I3) is avoided or at least reduced.

2. Method according to Claim 1, **characterized in that** the clocking of the pulses for the actuation of the current-conducting switches (T1, T3; T5, T7; T9, T11) of the power inverters (12, 14, 16) is derived from different time bases (A, B; C, D, E).

3. Method according to Claim 1 or 2, **characterized in that** the clocking of the pulses is oriented centrally, or is a centre aligned mode.

4. Method according to one of the preceding claims, **characterized in that** the clocking of the pulses for the actuation of the switches (T1, T3; T5, T7; T9, T11) of the power inverters (12, 14, 16) of the two phases (18, 20, 22) of the motor is phase shifted by 180°.

5. Method according to Claim 4, **characterized in that** the clocking of the pulses for the positive half-waves of the phase currents (I1, I2, I3) is carried out by a first timer (A), and the clocking of the pulses for the negative half-waves of the phase currents (I1, I2, I3) is carried out by a second timer (B).

6. Method according to one of Claims 1 to 3, **characterized in that** the clocking of the pulses in the three bridge halves (T1, T3; T5, T7; T9, T11) of the power inverters (12, 14, 16) of a three-phase motor is phase shifted in each case by 120°.

7. Method according to one of Claims 1 to 3, **characterized in that** the clocking of the pulses for actuating the switches (T1, T3; T5, T7; T9, T11) of the power inverters (12, 14, 16) is carried out in such a way that the longest pulse is output at the start of the clocking period (T), and each further pulse is shifted to the end of the clock period (T) to such an extent that no overlapping, or minimum overlapping occurs at least with the longest pulse.

8. Method according to Claim 7, **characterized in that** the clocking of the pulses for actuating the switches (T1, T3; T5, T7; T9, T11) of the power inverters (12, 14, 16) of a three-phase (18, 20, 22) motor is carried out in such a way that the shortest pulse is shifted to the end of the clock period (T) to such an extent that said pulse has no overlapping, or minimum overlapping, with the longest pulse and/or with the second-longest pulse.

9. Method according to Claim 7 or 8, **characterized in that** the longest pulse is output at the start of the clock period (T), and the shortest pulse is shifted to the end of the clock period (T).

## Revendications

1. Procédé d'alimentation en courant d'un moteur électrique à plusieurs barres, commutable électroniquement et commandé par modulation de la largeur d'impulsions, par un réseau à tension continue, en particulier pour alimenter le moteur d'une servodirection électrique d'un véhicule automobile, à l'aide d'une unité de commande constituée d'un microcontrôleur et qui commande au moins deux onduleurs raccordés en un circuit en pont plein ou en un circuit en H et qui alimente les enroulements de barres du moteur, au moins une capacité de circuit intermédiaire, de préférence un condensateur électrolytique, étant disposée entre le réseau à tension continue et les redresseurs, et reprenant les courants de barre pendant les pauses de flux de courant dans les commutateurs électroniques de l'onduleur, **caractérisé en ce que** la charge en courant de la capacité (26) du circuit intermédiaire est réduite par un cadençage, décalé dans le temps, du rapport entre les impulsions qui commandent les commutateurs (T1, T3; T5, T7; T9, T11) des onduleurs (12, 14, 16), de telle sorte que la superposition des impulsions des courants de barre (I1, I2, I3) soit évitée ou au moins diminuée.

2. Procédé selon la revendication 1, **caractérisé en ce que** le cadençage des impulsions de commande des commutateurs (T1, T3; T5, T7; T9, T11) d'apport de courant des onduleurs (12, 14, 16) est déduit de différentes bases temporelles (A, B; C, D, E).

3. Procédé selon la revendication 1 ou 2, **caractérisé en ce que** le cadençage des impulsions est aligné sur le centre, c'est-à-dire s'effectue en "centre aligned modus".

4. Procédé selon l'une des revendications précédentes, **caractérisé en ce que** le cadençage des impulsions de commande des commutateurs (T1, T3; T5, T7; T9, T11) des onduleurs (12, 14, 16) de deux barres (18, 20, 22) du moteur est déphasé de 180°.

5. Procédé selon la revendication 4, **caractérisé en ce que** le cadençage des impulsions des demi-ondes positives des courants de barres (I1, I2, I3) s'effectue par une première horloge (A) et pour les demi-ondes négatives des courants de barres (I1, I2, I3) par une deuxième horloge (B).

6. Procédé selon l'une des revendications 1 à 3, **caractérisé en ce que** le cadençage des impulsions des trois moitiés de pont (T1, T3; T5, T7; T9, T11) des onduleurs (12, 14, 16) d'un moteur à trois barres est mutuellement déphasé de 120°.

7. Procédé selon l'une des revendications 1 à 3, **caractérisé en ce que** le cadençage des impulsions de commande des commutateurs (T1, T3; T5, T7; T9, T11) des onduleurs (12, 14, 16) s'effectue de telle sorte que la plus longue impulsion est émise au début de la période de cadençage (T) et **en ce que** chaque autre impulsion est décalée en direction de l'extrémité de la période de cadençage (T) d'une valeur telle qu'aucune superposition ou que la superposition la plus petite possible ait lieu au moins avec l'impulsion la plus longue.

8. Procédé selon la revendication 7, **caractérisé en ce que** le cadençage des impulsions de commande des commutateurs (T1, T3; T5, T7; T9, T11) des onduleurs (12, 14, 16) d'un moteur à trois barres (18, 20, 22) s'effectue de telle sorte que l'impulsion la plus courte est décalée vers l'extrémité de la période de cadençage (T) jusqu'à ce qu'elle ne présente plus de superposition ou la superposition la plus petite possible avec l'impulsion la plus longue et/ou la deuxième impulsion la plus longue.

9. Procédé selon la revendication 7 ou 8, **caractérisé en ce que** l'impulsion la plus longue est émise au début de la période de cadençage (T) et l'impulsion la plus courte est décalée vers l'extrémité de la période de cadençage (T).
